# FASCICULE DE BREVET EUROPEEN

(11) **EP 1 578 652 B1**
(45) Date de publication et mention de la délivrance du brevet: **23.07.2008**
(21) Numéro de dépôt: 03785845.3
(22) Date de dépôt: 17.12.2003
(51) Int. Cl.: B60T 11/26, B60T 11/16

(54) **DISPOSITIF DE COMMANDE DE FREIN A MA TRE-CYLINDRE**
HAUPTBREMSZYLINDER
MASTER CYLINDER BRAKE CONTROL DEVICE

(30) Priorité: 20.12.2002 FR 0216450
(43) Date de publication de la demande: 28.09.2005
(73) Titulaire: ROBERT BOSCH GMBH, 70442 Stuttgart (DE)
(72) Inventeur: DEMERSSEMAN, Remi, F-75004 Paris (FR); COME, Philippe, F-60300 Senlis (FR); QUELLEU, Thierry, F-92600 Asnières-sur-Seine (FR); GASCHET, Nicolas, F-78380 Bougival (FR); L'AOT, Jean-Michel, F-93200 Saint-Denis (FR)
(74) Mandataire: Hurwic, Aleksander Wiktor
(86) Numéro de dépôt international: PCT/EP2003/014359
(87) Numéro de publication internationale: WO 2004/056635

(56) Documents cités:
- EP-A- 0 326 965
- DE-A- 4 430 168
- DE-A- 10 056 479
- DE-A- 19 642 239

## Description

La présente invention concerne un dispositif de commande de frein à maître-cylindre.

On connaît déjà du document DE 4430168, considéré comme le plus proche état de la technique, un dispositif de commande de frein pour véhicule automobile, du type comprenant un réservoir de liquide de frein porté par un corps de maître-cylindre de commande de frein et relié à ce corps par des moyens de raccordement hydraulique comportant deux paires d'organes de raccordement complémentaires mâle et femelle, emboîtés l'un dans l'autre, portés par le réservoir et le corps de maître-cylindre, ces organes de raccordement ayant des formes générales tubulaires d'axes sensiblement parallèles à une direction d'emboîtement commune aux éléments de raccordement, dite direction d'emboîtement.

Généralement, le maître cylindre est du type tandem, les deux paires d'organes de raccordement complémentaires reliant respectivement le réservoir à deux chambres primaire et secondaire du maître-cylindre. Le maître-cylindre est destiné habituellement à distribuer le liquide de frein sous pression dans un circuit hydraulique de freinage auquel il est raccordé.

De façon classique, les deux organes de raccordement femelles sont ménagés dans le corps de maître-cylindre et débouchent dans un siège d'appui du réservoir sur ce corps. L'étanchéité entre chaque organe de raccordement femelle et l'organe de raccordement mâle correspondant est assurée par un joint annulaire d'étanchéité intercalé entre ces organes de raccordement complémentaires. Ce joint est habituellement en matériau déformable élastiquement, notamment en élastomère.

Habituellement, le remplissage du circuit hydraulique de freinage est effectué sur la chaîne de montage du véhicule par introduction du liquide de frein à pression élevée (par exemple 10 bars) dans le réservoir porté par le maître-cylindre.

Or, sous l'effet de la circulation du liquide de frein sous pression élevée, le réservoir subit des contraintes tendant notamment à le déplacer par rapport au corps de maître-cylindre sensiblement parallèlement à un plan perpendiculaire à la direction d'emboîtement des organes de raccordement. De ce fait, les joints d'étanchéité intercalés entre les organes de raccordement complémentaires sont déformés de façon à présenter deux parties diamétralement opposées dont l'une est comprimée entre les bords complémentaires des organes de raccordement mâle et femelle et l'autre est desserrée du bord de l'organe femelle créant ainsi une fuite indésirable de liquide de frein.

L'invention a notamment pour but de limiter les risques de fuite de liquide de frein entre les organes de raccordement mâle et femelle lors du remplissage du circuit hydraulique de freinage sous pression élevée.

La présente invention concerne un dispositif de commande de frein à maître-cylindre. Le document DE44 30168 est consideré comme le plus proche état de la technique dans l'état de la technique un dispositif de commande de frein pour véhicule automobile, du type comprenant un réservoir de liquide de frein porté par un corps de maître-cylindre de commande de frein et relié à ce corps par des moyens de raccordement hydraulique comportant deux paires d'organes de raccordement complémentaires mâle et femelle, emboîtés l'un dans l'autre, portés par le réservoir et le corps de maître-cylindre, ces organes de raccordement ayant des formes générales tubulaires d'axes sensiblement parallèles à une direction d'emboîtement commune aux éléments de raccordement, dite direction d'emboîtement.

Généralement, le maître cylindre est du type tandem, les deux paires d'organes de raccordement complémentaires reliant respectivement le réservoir à deux chambres primaire et secondaire du maître-cylindre. Le maître-cylindre est destiné habituellement à distribuer le liquide de frein sous pression dans un circuit hydraulique de freinage auquel il est raccordé.

De façon classique, les deux organes de raccordement femelles sont ménagés dans le corps de maître-cylindre et débouchent dans un siège d'appui du réservoir sur ce corps. L'étanchéité entre chaque organe de raccordement femelle et l'organe de raccordement mâle correspondant est assurée par un joint annulaire d'étanchéité intercalé entre ces organes de raccordement complémentaires. Ce joint est habituellement en matériau déformable élastiquement, notamment en élastomère.

Habituellement, le remplissage du circuit hydraulique de freinage est effectué sur la chaîne de montage du véhicule par introduction du liquide de frein à pression élevée (par exemple 10 bars) dans le réservoir porté par le maître-cylindre.

Or, sous l'effet de la circulation du liquide de frein sous pression élevée, le réservoir subit des contraintes tendant notamment à le déplacer par rapport au corps de maître-cylindre sensiblement parallèlement à un plan perpendiculaire à la direction d'emboîtement des organes de raccordement. De ce fait, les joints d'étanchéité intercalés entre les organes de raccordement complémentaires sont déformés de façon à présenter deux parties diamétralement opposées dont l'une est comprimée entre les bords complémentaires des organes de raccordement mâle et femelle et l'autre est desserrée du bord de l'organe femelle créant ainsi une fuite indésirable de liquide de frein.

L'invention a notamment pour but de limiter les risques de fuite de liquide de frein entre les organes de raccordement mâle et femelle lors du remplissage du circuit hydraulique de freinage sous pression élevée.

A cet effet, l'invention a pour objet un dispositif de commande de frein pour véhicule automobile, du type précité, caractérisé en ce qu'il comprend au moins une paire d'organes complémentaires mâle et femelle, distincts des moyens de raccordement hydraulique, portés par le réservoir et le corps de maître-cylindre, emboîtés l'un dans l'autre sensiblement parallèlement à la direction d'emboîtement pour immobiliser le réservoir par rapport au corps de maître-cylindre sensiblement parallèlement à un plan perpendiculaire à la direction d'emboîtement.

Suivant d'autres caractéristiques de ce dispositif de commande de frein :
- un des organes d'immobilisation a une forme générale de révolution d'axe décalé par rapport à un plan contenant les axes des organes de raccordement ;
- le dispositif comprend deux paires d'organes d'immobilisation complémentaires mâle et femelle emboîtés l'un dans l'autre ;
- un des organes d'immobilisation de chaque paire a une forme générale de révolution d'axe, appelé axe de la paire d'organes d'immobilisation, décalé par rapport à un plan contenant les axes des organes de raccordement ;
- les axes des paires d'organes d'immobilisation sont disposés de part et d'autre du plan contenant les axes des organes de raccordement ;
- un joint annulaire d'étanchéité, notamment en élastomère, est intercalé entre les organes de raccordement complémentaires ;
- le réservoir est en appui sur un siège sensiblement horizontal ménagé sur le corps de maître cylindre ;
- les deux organes de raccordement femelles sont ménagés dans le corps de maître-cylindre et débouchent dans le siège d'appui ;
- les deux organes d'immobilisation femelles sont ménagés dans le corps de maître-cylindre et débouchent dans le siège d'appui ;
- le réservoir est muni de deux pattes de fixation sur le corps de maître-cylindre en appui sur deux faces opposées sensiblement verticales délimitant le siège d'appui ;
- le maître cylindre est du type tandem, les deux paires d'organes de raccordement complémentaires reliant respectivement le réservoir à deux chambres primaire et secondaire du maître cylindre ;
- le réservoir comprend au moins un organe de raccordement à un conduit de remplissage de ce réservoir en liquide de frein, cet organe de raccordement délimitant un canal d'écoulement du liquide frein ayant une direction générale sensiblement orthogonale à la direction d'emboîtement.

L'invention sera mieux comprise à la lecture de la description qui va suivre, donnée uniquement à titre d'exemple et faite en se référant aux dessins dans lesquels :
- la figure 1 est une vue de dessus du dispositif de commande de frein selon l'invention, le réservoir de liquide de frein étant représenté en traits mixtes ;
- les figure 2 et 3 sont des vues en perspectives, selon deux points de vue différents, du dispositif de commande de frein selon l'invention, dans lesquelles le réservoir est représenté séparé du maître-cylindre.

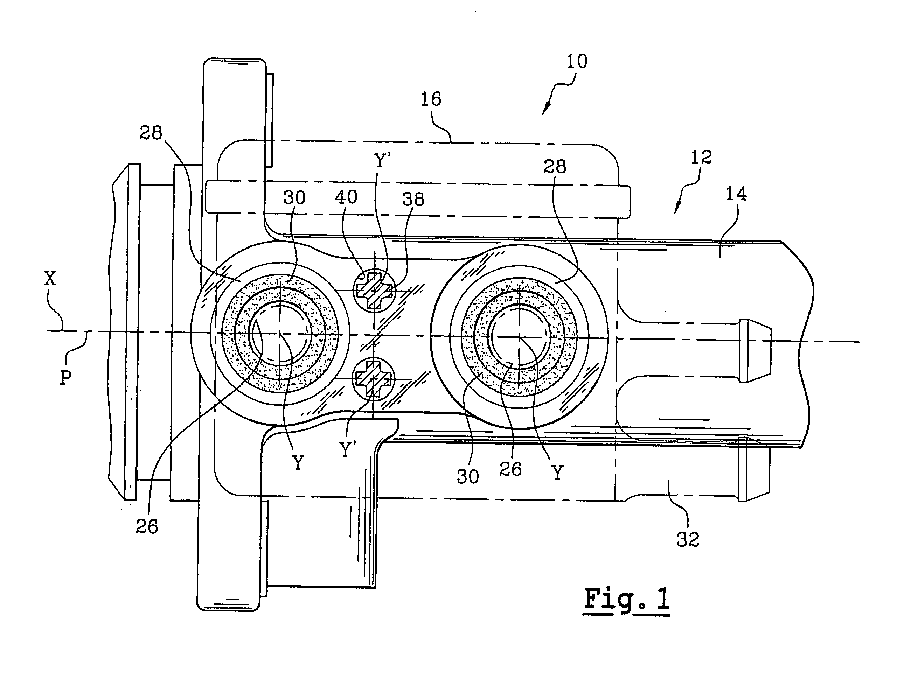

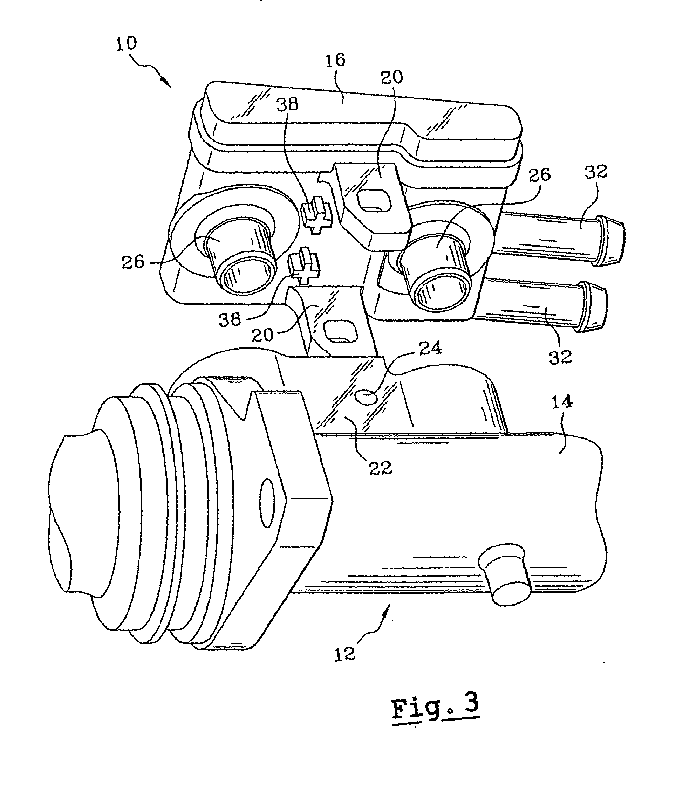

On a représenté sur les figures 1 à 3 un dispositif de commande de frein pour véhicule automobile, selon l'invention, désigné par la référence générale 10.

Le dispositif de commande 10 comprend un maître-cylindre 12 muni d'un corps 14 portant un réservoir 16 de liquide de frein. Le corps 14 et le réservoir 16 sont généralement agencés dans un compartiment moteur du véhicule.

Le maître-cylindre 12 est de type tandem. Le corps 14 du maître-cylindre a une forme générale cylindrique d'axe X. Ce corps 14 délimite deux chambres primaire et secondaire classiques raccordées à un circuit hydraulique de freinage non représenté.

Dans ce qui suit, les orientations verticale et horizontale sont celles couramment définies à partir de la direction donnée par un fil à plomb.

Le réservoir 16, de préférence en plastique, est en appui sur un siège 18, sensiblement horizontal, ménagé sur une saillie du corps 14 de maître-cylindre formant une embase 19.

Le réservoir 16 est muni de deux pattes 20 de fixation sur le corps 14 de maître-cylindre. Ces pattes de fixation 20, sensiblement verticales, sont destinées à venir en appui sur deux faces opposées 22, sensiblement verticales, délimitant le siège d'appui 18 et l'embase 19. Les pattes 20 sont fixées sur les faces d'appui 22 à l'aide de moyens classiques comprenant par exemple un organe formant broche (non représenté) s'étendant à travers les pattes de fixation 20 et un orifice de fixation 24 ménagé dans l'embase 19 du corps 14 de maître-cylindre. Cet orifice de fixation 24 est muni de deux extrémités débouchant respectivement dans les deux faces d'appui 22.

De préférence, les deux pattes de fixation 20 sont venues de matière avec le réservoir 16.

Le réservoir 16 est relié aux chambres primaire et secondaire du corps 14 de maître-cylindre par des moyens de raccordement hydraulique comportant deux paires d'organes de raccordement complémentaires mâle 26 et femelle 28 emboîtés l'un dans l'autre. Ces organes de raccordement 26, 28 sont portés par le réservoir 16 et le corps 14 de maître-cylindre.

Les deux paires d'organes de raccordement complémentaires 26, 28 relient le réservoir 16 respectivement aux deux chambres primaire et secondaire du corps 14 de maître-cylindre.

Dans l'exemple illustré, les deux organes de raccordement femelles 28 sont ménagés dans l'embase 19 du corps 14 de maître-cylindre et débouchent dans le siège d'appui 18. Par ailleurs les deux organes de raccordement mâles 26 sont venus de matière avec le réservoir 16.

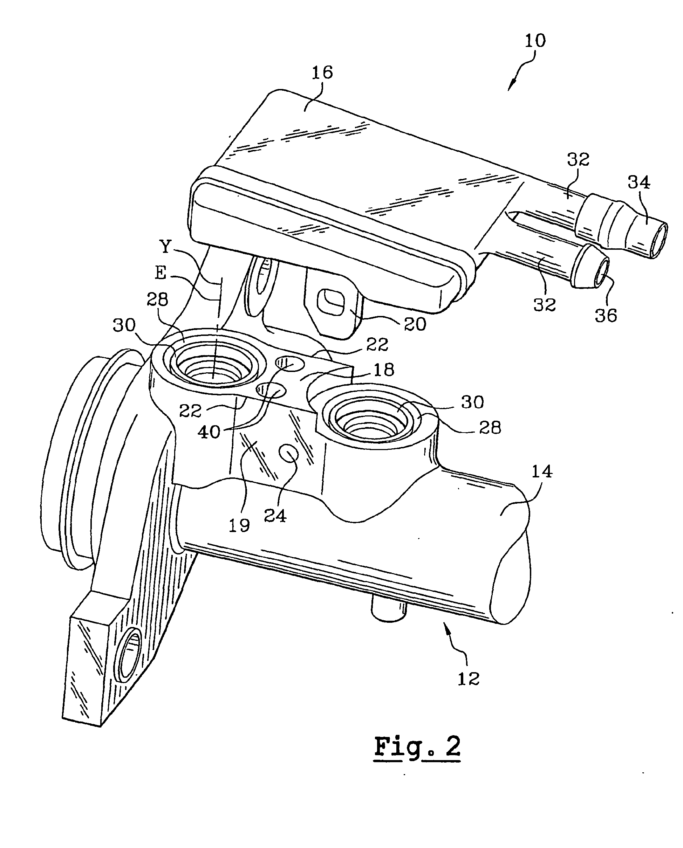

Les organes de raccordement mâles 26 et femelles 28 ont des formes générales tubulaires d'axe Y sensiblement parallèles à une direction E d'emboîtement commune à tous les éléments de raccordement 26, 28, dite direction d'emboîtement. Cette direction d'emboîtement est représentée en traits mixtes sur la figure 2.

En se référant à la figure 1, on voit que l'axe X du corps 14 de maître-cylindre et les axes Y des organes de raccordement 26, 28 sont contenus dans un même plan P sensiblement vertical.

Un joint annulaire d'étanchéité 30 est intercalé entre deux organes de raccordement complémentaires mâle 26 et femelle 28. Ce joint 30 est de préférence en élastomère.

Dans l'exemple illustré, le réservoir 16 est raccordé à un réceptacle, non représenté, de remplissage de ce réservoir en liquide de frein, par l'intermédiaire de moyens de raccordement comprenant notamment un organe de raccordement 32, venu de matière avec le réservoir 16, sur lequel est emmanché un conduit de remplissage 34 raccordé au réceptacle de remplissage. Dans ce qui suit, l'organe 32 sera appelé organe de remplissage 32.

Le réceptacle de remplissage, notamment de volume supérieur à celui du réservoir 16, est logé à distance de ce réservoir 16, dans un espace approprié du compartiment moteur.

Dans l'exemple illustré, le réservoir 16 est muni de deux conduits de remplissage 32. On notera que chaque organe de remplissage 32 délimite un canal 36 d'écoulement du liquide de frein ayant une direction générale sensiblement orthogonale à la direction d'emboîtement E.

Le dispositif de commande 10 comprend également deux paires d'organes complémentaires mâle 38 et femelle 40 distincts des moyens de raccordement hydrauliques du réservoir 16 au maître-cylindre 12, portés par le réservoir 16 et le corps 14 de maître-cylindre.

Ces organes complémentaires mâle 38 et femelle 40 sont emboîtés l'un dans l'autre, sensiblement parallèlement à la direction d'emboîtement E, pour immobiliser le réservoir 16 par rapport au corps 14 de maître-cylindre sensiblement parallèlement à un plan perpendiculaire à la direction d'emboîtement E.

Dans l'exemple décrit, les deux organes d'immobilisation femelles 40 sont ménagés dans l'embase 19 du corps 14 de maître-cylindre et débouchent dans le siège d'appui 18.

Chaque organe d'immobilisation femelle 40 a une forme générale de révolution d'axe Y'. Cet axe Y' sera appelé par la suite axe de la paire d'organes d'immobilisation complémentaires 38, 40.

On notera que les axes Y' des deux paires d'organes d'immobilisation 38, 40 sont disposés de part et d'autre du plan P, chaque axe Y' étant décalé par rapport à ce plan P. Plus particulièrement, les axes Y' des deux paires d'organes d'immobilisation 38, 40 sont contenus dans un plan sensiblement perpendiculaire au plan P.

Dans l'exemple illustré, les organes femelles de raccordement 28 et d'immobilisation 40 sont ménagés sur le corps 14 de maître-cylindre, les organes mâles de raccordement 26 et d'immobilisation 38 étant portés par le réservoir 16. En variante, il pourrait être possible de répartir différemment les organes femelles et mâles sur le corps 14 de maître-cylindre et le réservoir 16.

Dans l'exemple illustré, le dispositif de commande comprend deux paires d'organes d'immobilisation complémentaires mâle 38 et femelle 40. Toutefois, en variante, le dispositif de commande 10 pourrait ne comporter qu'une seule paire d'organes d'immobilisation complémentaires mâle 38 et femelle 40, l'axe Y' de cette paire d'organes d'immobilisation 38, 40 étant de préférence décalé par rapport au plan P contenant les axes Y des organes complémentaires de raccordement 26, 28.

Pour remplir le circuit hydraulique de freinage raccordé au maître-cylindre 12, on introduit le liquide de frein sous pression dans le réservoir 16 et le maître-cylindre 12 par l'intermédiaire de l'organe de remplissage 32 raccordé au réservoir 16.

Les organes d'immobilisation complémentaires 38, 40, agencés comme décrit ci-dessus, permettent d'éviter efficacement tout déplacement indésirable du réservoir 16 par rapport au corps 14 de maître-cylindre sensiblement parallèlement à un plan perpendiculaire à la direction d'emboîtement E, c'est-à-dire sensiblement parallèlement au plan de la figure 1. En particulier, les organes d'immobilisation complémentaires 38, 40 permettent d'éviter la rotation du réservoir 16 autour d'un axe imaginaire instantané de rotation sensiblement parallèle au plan P, situé à proximité de ce plan P.

On évite ainsi les risques de fuite de liquide de frein entre les organes de raccordement mâles et femelles lors du remplissage du circuit hydraulique de freinage sous pression élevée.

## Revendications

1. Dispositif de commande de frein pour véhicule automobile, du type comprenant un réservoir (16) de liquide de frein porté par un corps (14) de maître-cylindre (12) de commande de frein et relié à ce corps (14) par des moyens de raccordement hydraulique comportant deux paires d'organes de raccordement complémentaires mâle (26) et femelle (28), emboîtés l'un dans l'autre, portés par le réservoir (16) et le corps (14) de maître-cylindre (12), ces organes de raccordement (26, 28) ayant des formes générales tubulaires d'axes (Y) sensiblement parallèles à une direction d'emboîtement (E) commune aux éléments de raccordement (26, 28), dite direction d'emboîtement, **caractérisé en ce qu'**il comprend au moins une paire d'organes complémentaires mâle (38) et femelle (40), distincts des moyens (26, 28) de raccordement hydraulique, portés par le réservoir (16) et le corps (14) de maître-cylindre (12), emboîtés l'un dans l'autre sensiblement parallèlement à la direction d'emboîtement (E) pour immobiliser le réservoir (16) par rapport au corps (14) de maître-cylindre (12) sensiblement parallèlement à un plan perpendiculaire à la direction d'emboîtement (E).

2. Dispositif selon la revendication 1, **caractérisé en ce qu'**au moins un des organes d'immobilisation (40) a une forme générale de révolution d'axe (Y') décalé par rapport à un plan (P) contenant les axes (Y) des organes de raccordement (26, 28).

3. Dispositif selon la revendication 1 ou 2, **caractérisé en ce qu'**il comprend deux paires d'organes d'immobilisation complémentaires mâle (38) et femelle (40) emboîtés l'un dans l'autre.

4. Dispositif selon la revendication 3, **caractérisé en ce qu'**au moins un des organes d'immobilisation (40) de chaque paire a une forme générale de révolution d'axe, appelé axe (Y') de la paire d'organes d'immobilisation, décalé par rapport à un plan (P) contenant les axes (Y) des organes de raccordement (26, 28).

5. Dispositif selon la revendication 4, **caractérisé en ce que** les axes (Y') des paires d'organes d'immobilisation sont disposés de part et d'autre du plan (P) contenant les axes des organes de raccordement.

6. Dispositif selon l'une quelconque .des revendications précédentes, **caractérisé en ce qu'**un joint annulaire d'étanchéité (30), notamment en élastomère, est intercalé entre les organes de raccordement complémentaires (26, 28).

7. Dispositif selon l'une quelconque des revendications précédentes, **caractérisé en ce que** le réservoir (16) est en appui sur un siège (18) sensiblement horizontal ménagé sur le corps (14) de maître cylindre (12).

8. Dispositif selon la revendication 7, **caractérisé en ce que** les deux organes de raccordement femelles (28) sont ménagés dans le corps (14) de maître-cylindre (12) et débouchent dans le siège d'appui (18).

9. Dispositif selon la revendication 7 ou 8, **caractérisé en ce que** les deux organes d'immobilisation femelles (40) sont ménagés dans le corps (14) de maître-cylindre (12) et débouchent dans le siège d'appui (18).

10. Dispositif selon l'une quelconque des revendications 7 à 9, **caractérisé en ce que** le réservoir (16) est muni de deux pattes (20) de fixation sur le corps (14) de maître-cylindre (12) en appui sur deux faces opposées (22) sensiblement verticales délimitant le siège d'appui (18).

11. Dispositif selon l'une quelconque des revendications précédentes, **caractérisé en ce que** le maître cylindre (12) est du type tandem, les deux paires d'organes de raccordement complémentaires (26, 28) reliant respectivement le réservoir (16) à deux chambres primaire et secondaire du maître cylindre (12).

12. Dispositif selon l'une quelconque des revendications précédentes, **caractérisé en ce que** le réservoir (16) comprend au moins un organe (32) de raccordement à un conduit (34) de remplissage de ce réservoir (16) en liquide de frein, cet organe de raccordement (32) délimitant un canal (36) d'écoulement du liquide frein ayant une direction générale sensiblement orthogonale à la direction d'emboîtement (E).

## Claims

1. A brake control device for a motor vehicle, the device being of the type comprising a brake fluid reservoir (16) carried by a body (14) of a brake control master cylinder (12) and coupled to said body (14) via hydraulic coupling means comprising two pairs of complementary male and female coupling members (26, 28), with the members in each pair being interfitted one in the other, and being carried by the reservoir (16) and by the body (14) of the master cylinder (12), said coupling members (26, 28) being generally tubular in shape about axes (Y) that are substantially parallel to an "interfitting direction" (E) that is common to the coupling elements (26, 28), said brake control device being **characterized in that** it further comprises at least one pair of complementary male and female members (38, 40) that are distinct from the hydraulic coupling means (26, 28), that are carried by the reservoir (16) and by the body (14) of the master cylinder (12), and that are interfitted one in the other substantially parallel to the interfitting direction (E) for the purpose of securing the reservoir (16) so that it is held stationary relative to the body (14) of the master cylinder (12) substantially parallel to a plane that is perpendicular to the interfitting direction (E).

2. A device according to claim 1, **characterized in that** at least one of the securing members (40) has a general shape that is circularly symmetrical about an axis (Y') that is offset relative to the plane (P) containing the axes (Y) of the coupling members (26, 28).

3. A device according to claim 1 or claim 2, **characterized in that** it comprises two pairs of complementary male and female securing members (38, 40), the members of each pair being interfitted one in the other.

4. A device according to claim 3, **characterized in that** at least one of the securing members (40) of each pair has a general shape that is circularly symmetrical about an "axis (Y') of the pair of securing members", which axis is offset relative to a plane (P) containing the axes (Y) of the coupling members (26, 28).

5. A device according to claim 4, **characterized in that** the axes (Y') of the pairs of securing members are disposed on either side of the plane (P) containing the axes of the coupling members.

6. A device according to any preceding claim, **characterized in that** an annular sealing gasket (30), in 15 particular a gasket made of elastomer, is interposed between the complementary coupling members (26, 28).

7. A device according to any preceding claim, **characterized in that** the reservoir (16) bears against a 20 seat (18) that is substantially horizontal and that is provided on the body (14) of the master cylinder (12).

8. A device according to claim 7, **characterized in that** the two female coupling members (28) are provided in the 25 body (14) of the master cylinder (12) and they open out in the bearing seat (18).

9. A device according to claim 7 or claim 8, **characterized in that** the two female securing members (40) are provided in the body (14) of the master cylinder (12) and they open out in the bearing seat (18) .

10. A device according to any one of claims 7 to 9, **characterized in that** the reservoir (16) is provided with 35 two fastening tabs (20) for fastening to the body (14) of the master cylinder (12) while bearing against two substantially vertical opposite faces (22) defining the bearing seat (18).

11. A device according to any preceding claim, **characterized in that** the master cylinder (12) is of the tandem type, the two pairs of complementary coupling members (26, 28) respectively coupling the reservoir (16) to a primary chamber and to a secondary chamber of the master cylinder (12).

12. A device according to any preceding claim, **characterized in that** the reservoir (16) is provided with at least one coupling member (32) for coupling to a filling pipe (34) for filling said reservoir (16) with brake fluid, said coupling member (32) defining a channel (36) through which the brake fluid can flow and which extends in a general direction that is substantially orthogonal to the interfitting direction (E).

## Patentansprüche

1. Vorrichtung zur Bremssteuerung für Kraftfahrzeug, vom Typ mit einem Bremsflüssigkeitsbehälter (16), der von einem Körper (14) eines Hauptbremszylinders (12) zur Bremssteuerung getragen und mit diesem Körper (14) über hydraulische Anschlußmittel verbunden ist, die zwei Paare von komplementären steckerförmigen (26) bzw. buchsenförmigen (28) Anschlußelementen aufweisen, die ineinander eingesteckt und vom Behälter (16) und dem Körper (14) des Hauptbremszylinders (12) getragen sind, wobei diese Anschlußelemente (26, 28) allgemein rohrförmige Formen haben mit Achsen (Y) im Wesentlichen parallel zu einer Einsteckrichtung (E) sind, welche den Anschlußelementen (26, 28) gemeinsam ist und Einsteckrichtung genannt wird, **dadurch gekennzeichnet, dass** sie mindestens ein Paar von komplementären steckerförmigen (38) bzw. buchsenförmigen (40) Elementen aufweist, die sich von den hydraulischen Anschlußmitteln (26, 28) unterscheiden, die von dem Behälter (16) und dem Körper (14) des Hauptbremszylinders (12) getragen und im Wesentlichen parallel zur Einsteckrichtung (E) ineinander eingesteckt sind, um den Behälter (16) bezüglich des Körpers (14) des Hauptbremszylinders (12) im Wesentlichen parallel zu einer zur Einsteckrichtung (E) senkrechten Ebene zu blockieren.

2. Vorrichtung nach Anspruch 1, **dadurch gekennzeichnet, dass** mindestens eines der Blockierungselemente (40) eine allgemeine Rotationskörperform hat, deren Achse (Y') bezüglich einer Ebene (P) versetzt ist, welche die Achsen (Y) der Anschlußelemente (26, 28) enthält.

3. Vorrichtung nach Anspruch 1 oder 2, **dadurch gekennzeichnet, dass** sie zwei Paare von ineinander eingesteckten komplementären steckerförmigen (38) bzw. buchsenförmigen (40) Blockierungselementen aufweist.

4. Vorrichtung nach Anspruch 4, **dadurch gekennzeichnet, dass** mindestens eines der Blockierungselemente (40) jedes Paares eine allgemeine Rotationskörperform hat, deren Achse, die Achse (Y') des Paares von Blockierungselementen genannt wird, bezüglich einer Ebene (P) versetzt ist, welche die Achsen (Y) der Anschlußelemente (26, 28) enthält.

5. Vorrichtung nach Anspruch 4, **dadurch gekennzeichnet, dass** die Achsen (Y') der Paare von Blockierungselementen auf der einen und anderen Seite der Ebene (P) angeordnet sind, welche die Achsen der Anschlußelemente enthält.

6. Vorrichtung nach einem der vorhergehenden Ansprüche, **dadurch gekennzeichnet, dass** eine Ringdichtung (30), insbesondere aus Elastomer, zwischen den komplementären Anschlußelementen (26, 28) eingelegt ist.

7. Vorrichtung nach einem der vorhergehenden Ansprüche, **dadurch gekennzeichnet, dass** der Behälter (16) auf einem im Wesentlichen waagerechten Sitz (18) aufliegt, der am Körper (14) des Hauptbremszylinders (12) ausgebildet ist.

8. Vorrichtung nach Anspruch 7, **dadurch gekennzeichnet, dass** die beiden buchsenförmigen Anschlußelemente (28) im Körper (14) des Hauptbremszylinders (12) ausgebildet sind und in den Auflagesitz (18) münden.

9. Vorrichtung nach einem der Ansprüche 7 oder 8, **dadurch gekennzeichnet, dass** die beiden buchsenförmigen Blockierungselemente (40) im Körper (14) des Hauptbremszylinders (12) ausgebildet sind und in den Auflagesitz (18) münden.

10. Vorrichtung nach einem der Ansprüche 7 bis 9, **dadurch gekennzeichnet, dass** der Behälter (16) mit zwei Laschen (20) zur Befestigung am Körper (14) des Hauptbremszylinders (12) versehen ist, die auf zwei entgegengesetzten, im Wesentlichen senkrechten Flächen (22) aufliegen, die den Auflagesitz (18) begrenzen.

11. Vorrichtung nach einem der vorhergehenden Ansprüche, **dadurch gekennzeichnet, dass** der Hauptbremszylinder (12) vom Typ Tandem ist, wobei die beiden Paare von komplementären Anschlußelementen (26, 28) den Behälter (16) jeweils mit zwei Kammern, Primär- bzw. Sekundärkammer des Hauptbremszylinders (12) verbinden.

12. Vorrichtung nach einem der vorhergehenden Ansprüche, **dadurch gekennzeichnet, dass** der Behälter (16) mindestens ein Element (32) zum Anschluß an eine Leitung (34) zum Befüllen dieses Behälters (16) mit Bremsflüssigkeit aufweist, wobei dieses Anschlußelement (32) einen Abflußkanal (36) für die Bremsflüssigkeit begrenzt, der eine im Wesentlichen zur Einsteckrichtung (E) orthogonale Hauptrichtung hat.
